(19) Europäisches Patentamt
European Patent Office
Office européen des brevets

(11) Veröffentlichungsnummer: **0 431 411 B1**

(12) **EUROPÄISCHE PATENTSCHRIFT**

(45) Veröffentlichungstag der Patentschrift: **25.05.94**

(51) Int. Cl.[5]: **C09B 62/085**, D06P 1/382

(21) Anmeldenummer: **90122364.4**

(22) Anmeldetag: **23.11.90**

Die Akte enthält technische Angaben, die nach dem Eingang der Anmeldung eingereicht wurden und die nicht in dieser Patentschrift enthalten sind.

# (54) Azoreaktivfarbstoffe.

(30) Priorität: **06.12.89 DE 3940268**

(43) Veröffentlichungstag der Anmeldung:
**12.06.91 Patentblatt 91/24**

(45) Bekanntmachung des Hinweises auf die Patenterteilung:
**25.05.94 Patentblatt 94/21**

(84) Benannte Vertragsstaaten:
**CH DE FR GB LI**

(56) Entgegenhaltungen:
**EP-A- 0 230 210**
**EP-A- 0 299 315**
**FR-A- 2 436 166**

(73) Patentinhaber: **BAYER AG**
**D-51368 Leverkusen(DE)**

(72) Erfinder: **Herd, Karl-Josef, Dr.**
**Am Gartenfeld 66**
**W-5068 Odenthal-Holz(DE)**
Erfinder: **Hoppe, Manfred, Dr.**
**Kölner Strasse 233**
**W-5067 Kürten 2(DE)**
Erfinder: **Henk, Hermann, Dr.**
**Roggendorfstrasse 55**
**W-5000 Köln 80(DE)**
Erfinder: **Stöhr, Frank-Michael, Dr.**
**Am Thelen Siefen 10**
**W-5068 Odenthal-Osenau(DE)**

EP 0 431 411 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus FR-A-2 436 166 sind bereits Azorieaktivfarbstoffe bekannt, bei denen der chromophore Teil mit einem heterocyclischen Ring über einen Fluortriazinring verbunden ist.

Explizit beschrieben werden allerdings nur die Stellungsisomeren der 2-Aminonaphthalin-6,8-disulfonsäure als Diazokomponente.

Aus EP-A-230 210 sind u.a. Azoreaktivfarbstoffe bekannt, bei denen der chromophore Teil mit einem heterocyclischen Ring über einen Chlortriazinring verbunden ist.

Gegenstand der Erfindung sind Azoreaktivfarbstoffe der Formel

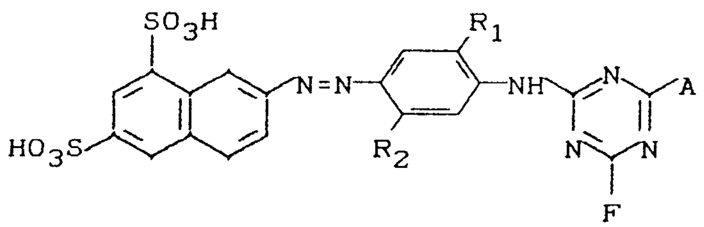

(1)

worin

$R_1$ = H, gegebenenfalls substituiertes $C_1$-$C_4$-Alkyl oder gegebenenfalls substituiertes $C_1$-$C_4$-Alkoxy,

$R_2$ = Cl, gegebenenfalls substituiertes $C_1$-$C_4$-Alkyl, gegebenenfalls substituiertes $C_1$-$C_4$-Alkoxy oder Acylamino,

A =

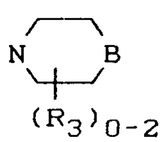

oder

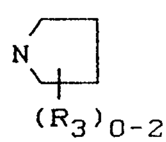

wobei

$R_3$ = $C_1$-$C_4$-Alkyl oder $C_1$-$C_4$-Alkoxy und

B = $CH_2$, S, SO, $SO_2$, O, N-$R_4$ mit

$R_4$ = H oder gegebenenfalls substituiertes $C_1$-$C_6$-Alkyl.

Geeignete Substituenten für $R_4$ sind insbesondere OH, $OSO_3H$, $SO_3H$, COOH.

Geeignete Acylaminoreste sind beispielsweise $C_1$-$C_4$-Alkylcarbonyl, $C_1$-$C_4$-Alkylsulfonyl, Phenylsulfonyl, Phenylcarbonyl, Phenyl-$C_1$-$C_4$-alkylcarbonyl, -$NHCONH_2$, wobei die Alkyl- und Phenylreste übliche Substituenten aufweisen können.

Bevorzugt sind Farbstoffe der Formel

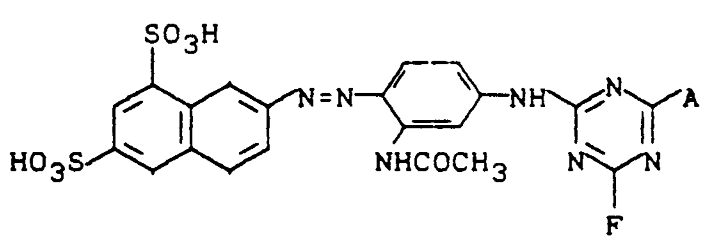

(2)

worin

A die obengenannte Bedeutung zukommt.

Besonders bevorzugt sind Farbstoffe der Formel

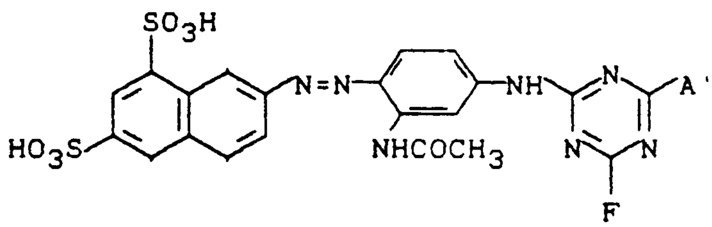

(3)

worin

A' =

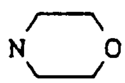 , 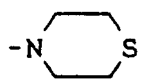 , 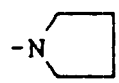 , 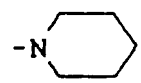 ,

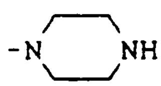 bzw. 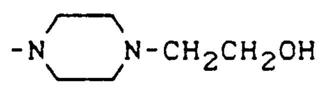

Die bevorzugte Herstellungsweise der Reaktivfarbstoffe (1) ist dadurch gekennzeichnet, daß man 7-Amino-1,3-naphthalindisulfonsäure diazotiert, auf Anilinderivate der Formel

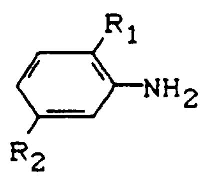

(4)

kuppelt und die resultierenden Farbbasen der Formel

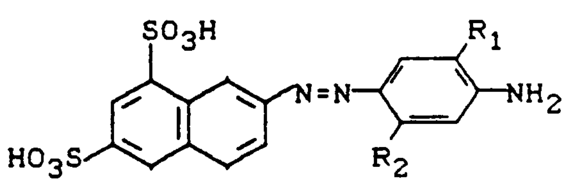

(5)

nacheinander mit 2,4,6-Trifluor-s-triazin und einem Amin HA unter Abspaltung von HF kondensiert.

Die neuen Farbstoffe eignen sich zum Färben und Bedrucken von hydroxyl- und amidgruppenhaltigen Materialien, insbesondere Cellulosematerialien. Sie zeichnen sich durch eine hohe Reaktivität und einen hohen Fixiergrad aus. Die mit diesen Farbstoffen erhältlichen Färbungen oder Drucke auf Cellulosematerialien zeichnen sich außerdem durch eine hohe Faser-Farbstoff-Bindungsstabilität sowie durch eine hervorragende Stabilität gegenüber Oxidationsmitteln, wie peroxid- oder chlorhaltige Waschmittel, aus. Die Auswaschbarkeit der beim Färben oder Druck nur in geringem Maße entstehenden Hydrolyseprodukte ist ausgezeichnet. Die Farbstoffe besitzen gute Naßechtheiten.

Die angegebenen Formeln sind die der freien Säuren. Bei der Herstellung werden im allgemeinen die Salze erhalten, insbesondere die Alkalisalze, wie Natrium-, Kalium- oder Lithiumsalze.

Die Farbstoffe können sowohl als Feststofformierungen wie auch als konzentrierte Lösungen eingesetzt werden.

Beispiel 1

23,6 g 7-Amino-1,3-naphthalindisulfonsäure-mono-Natriumsalz werden in 150 ml Wasser/30 g Eis und 20 ml konzentrierte Salzsäure angerührt und bei 5-10 °C tropfenweise mit 17 ml einer wäßrigen Natriumnitritlösung (300 g $NaNO_2$/l) versetzt. Nach einer Stunde Rühren bei 5-10 °C wird die überschüssige salpetrige Säure mit Amidosulfonsäure entfernt.

Diese cremfarbene Suspension dosiert man nun innerhalb von 30 Minuten zu einer neutralen Lösung der Kupplungskomponente, die aus 13,5 g N-(3-Aminophenyl)-acetamid-hydrochlorid, 50 ml Wasser, 50 g Eis und ca. 30 ml einer 10 %igen wäßrigen Lithiumhydroxidlösung bereitet wurde. Dabei hält man den pH-Wert der Reaktionsmischung mit 20 %iger wäßriger Kaliumhydrogencarbonatlösung konstant bei 6,0-6,5. Die Temperatur sollte nach Möglichkeit 10 °C nicht übersteigen. Nach erfolgter Zugabe rührt man 30 Minuten nach, wobei man den pH-Wert weiterhin konstant hält.

Die rotbraune Kupplungslösung wird mit Eis auf 0 °C abgekühlt und mit ca. 11 g Trifluor-s-triazin versetzt. Durch zudosieren von Kaliumhydrogencarbonatlösung oder Sodalösung hält man den pH-Wert konstant zwischen 6,0-6,2. Nach 5-10 Minuten ist die Kondensationsreaktion beendet. Man fügt eine Lösung von 13,4 g Morpholinhydrogensulfat in 50 ml Wasser zu, hält den pH-Wert mit Sodalösung konstant bei 7,5-8,0 und läßt die Reaktionstemperatur langsam auf 25 °C ansteigen. Die zweite Kondensationsreaktion wird ca. 1 Stunde nachgerührt, bis sich der pH-Wert nicht mehr nach kleineren Werten verändert. Man fügt 30 g Kochsalz sowie 30 g Kaliumchlorid zu, verrührt eine weitere Stunde und isoliert den ausgefallenen Farbstoff durch Abnutschen. Nach Trocknung bei 60 °C im Vakuum erhält man 55 g eines salzhaltigen organgeroten Farbstoffpulvers der Formel

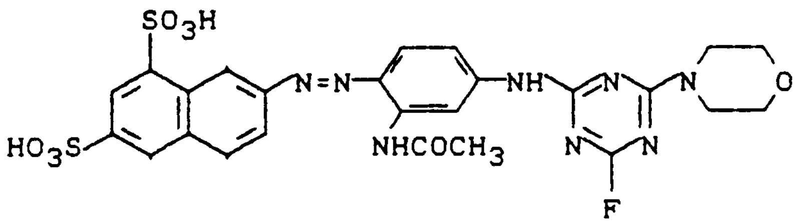

($\lambda_{max}$ = 396, 460 (sh) nm ($H_2O$)), das Baumwolle in brillanten hochechten goldgelben Farbtönen färbt.

Durch Variation des Amins HA sind in Analogie zu Beispiel 1 weitere wertvolle goldgelbe Reaktivfarbstoffe der Formel

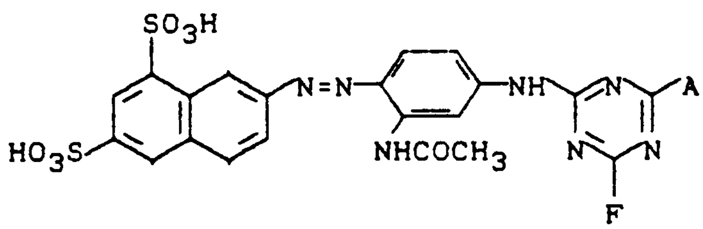

zugänglich:

| Beispiel | A | $\lambda_{max}$ ($H_2O$) |
|---|---|---|
| 2 | 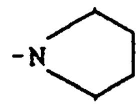 | 402, 470 (sh) nm |
| 3 | 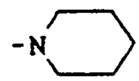 | 398, 470 (sh) nm |
| 4 | 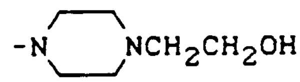 | 398, 480 (sh) nm |
| 5 | 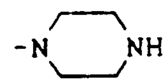 | 398, 470 (sh) nm |

## Patentansprüche

**1.** Azoreaktivfarbstoffe der Formel

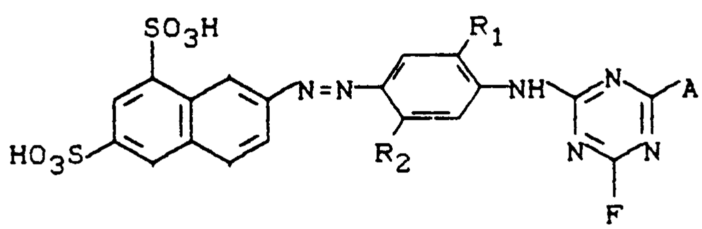

(1)

worin

$R_1$ = H, gegebenenfalls substituiertes $C_1$-$C_4$-Alkyl oder gegebenenfalls substituiertes $C_1$-$C_4$-Alkoxy,

$R_2$ = Cl, gegebenenfalls substituiertes $C_1$-$C_4$-Alkyl, gegebenenfalls substituiertes $C_1$-$C_4$-Alkoxy oder Acylamino,

A =

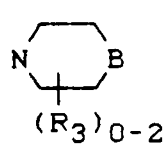

oder

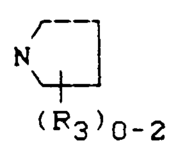

wobei

$R_3$ = $C_1$-$C_4$-Alkyl oder $C_1$-$C_4$-Alkoxy und

B = $CH_2$, S, SO, $SO_2$, O, N-$R_4$ mit

$R_4$ = H oder gegebenenfalls substituiertes $C_1$-$C_6$-Alkyl.

2. Farbstoffe des Anspruchs 1 der Formel

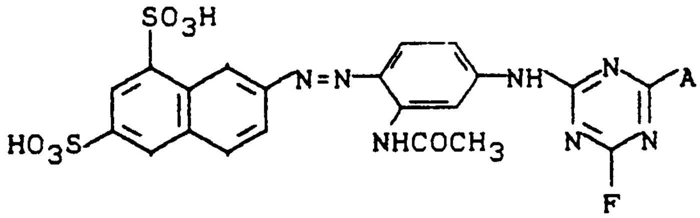

(2).

3. Farbstoffe des Anspruchs 1 der Formel

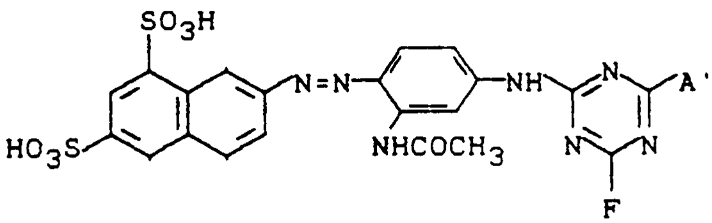

(3)

worin
A' =

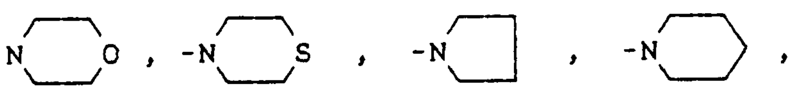

bzw.

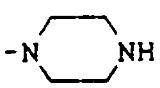

4. Verwendung der Farbstoffe der Ansprüche 1-3 zum Färben und Bedrucken von hydroxylgruppen- und carbonamidgruppenhaltigen Materialien.

**Claims**

1. Reactive azo dyestuffs of the formula

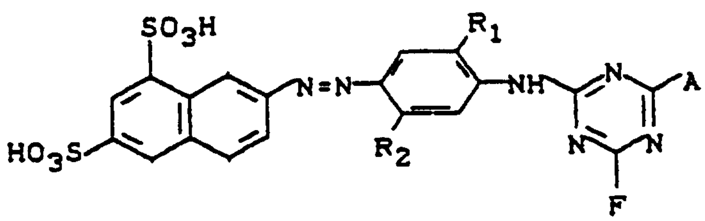

(1)

in which
$R_1$ is H, substituted or unsubstituted $C_1$-$C_4$-alkyl or substituted or unsubstituted $C_1$-$C_4$-alkoxy,
$R_2$ is Cl, substituted or unsubstituted $C_1$-$C_4$-alkyl, substituted or unsubstituted $C_1$-$C_4$-alkoxy or acylamino,

A is

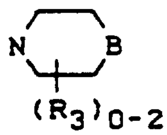 or 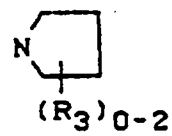

where

R$_3$ is C$_1$-C$_4$-alkyl or C$_1$-C$_4$-alkoxy and

B is CH$_2$, S, SO, SO$_2$, or N-R$_4$,

R$_4$ being H or substituted or unsubstituted C$_1$-C$_6$-alkyl.

**2.** Dyestuffs of Claim 1 of the formula

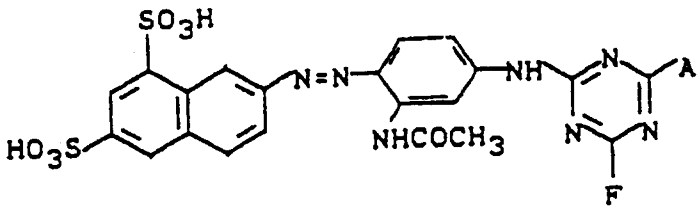 (2).

**3.** Dyestuffs of Claim 1 of the formula

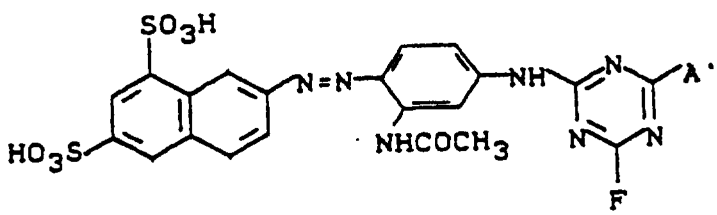 (3)

in which

A' =

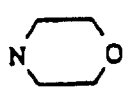 , 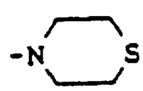 , 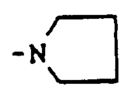 , 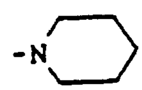 ,

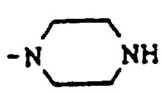 or 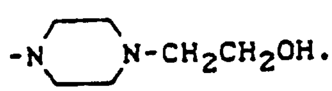

**4.** Use of the dyestuffs of Claims 1-3 for dyeing and printing hydroxyl- and carboxamido-containing materials.

## Revendications

**1.** Colorants azoïques réactifs de formule

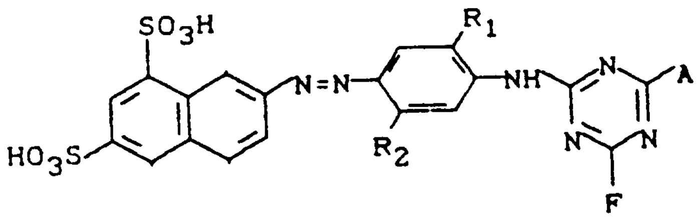

(1)

dans laquelle

$R_1$ = H, un alkyle en $C_1$-$C_4$ éventuellement substitué ou un alcoxy en $C_1$-$C_4$ éventuellement substitué,

$R_2$ = Cl, un alkyle en $C_1$-$C_4$ éventuellement substitué, un alcoxy en $C_1$-$C_4$ éventuellement substitué ou un acylamino,

A =

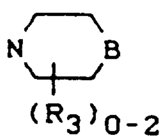

ou

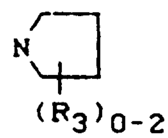

où

$R_3$ = un alkyle en $C_1$-$C_4$ ou un alcoxy en $C_1$-$C_4$ et

B = $CH_2$, S, SO, $SO_2$, O, N-$R_4$, avec

$R_4$ = H ou un alkyle en $C_1$-$C_6$ éventuellement substitué.

**2.** Colorants selon la revendication 1, de formule

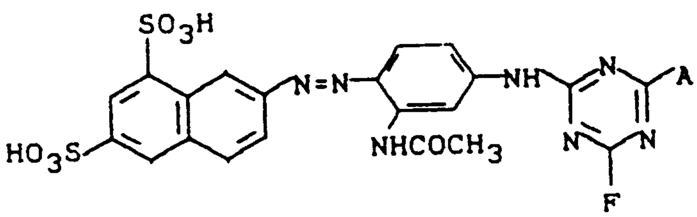

(2).

**3.** Colorants selon la revendication 1, de formule

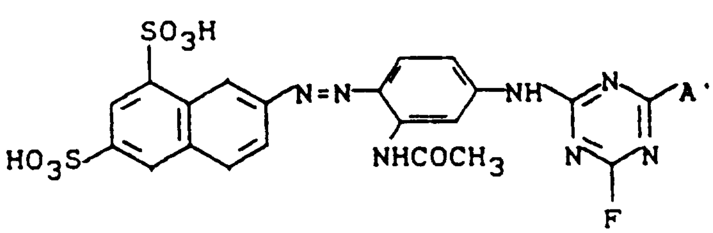

(3)

dans laquelle

A' =

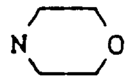 , 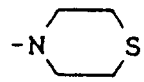 , 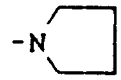 , 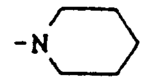 ,

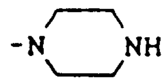 ou 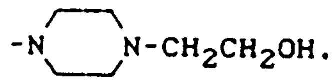

**4.** Utilisation des colorants selon les revendications 1 à 3 pour la teinture et l'impression de matières contenant des groupes hydroxyle et carboxamide.